# EUROPÄISCHE PATENTSCHRIFT

(11) **EP 0 682 866 B1**
(45) Veröffentlichungstag und Bekanntmachung des Hinweises auf die Patenterteilung: **08.09.1999**
(21) Anmeldenummer: 95106864.2
(22) Anmeldetag: 05.05.1995
(51) Int. Cl.: A01N 47/18, A01N 25/04

(54) **Wässrige, Pirimicarb enthaltende Suspensionskonzentrate**
Aqueous suspension concentrats containing pirimicarb
Suspensions aqueuses concentrées contenant du pirimicarb

(30) Priorität: 21.05.1994 DE 4417995
(43) Veröffentlichungstag der Anmeldung: 22.11.1995
(73) Patentinhaber: Stefes Agro GmbH, D-50170 Kerpen (DE)
(72) Erfinder: Müller, Jacki, D-50374 Erftstadt (DE)
(74) Vertreter: Flaccus, Rolf-Dieter, Dr.

(56) Entgegenhaltungen:
- EP-A- 0 237 227
- EP-A- 0 369 613
- EP-A- 0 425 729
- PESTICIDE SCIENCE, Bd. 29, Nr. 1, 1990 CHICHESTER, GB, Seiten 57-66, BD.HILL & D.J.INABA: 'Fate and Persistence of Residues on Wheat Used to Explain Efficacy Differences Between Deltamethrin Suspension Concentrate and Emulsifiable Concentrate Formulations'
- CHEMICAL ABSTRACTS, vol. 117, no. 15, 12.Oktober 1992 Columbus, Ohio, US; abstract no. 145270g, G.PINOCHET ET AL.: 'Best: an aphicide for field crops' & PHYTOMA, Nr. 439, 1992 Seiten 54-55,
- PESTICIDE SCIENCE, Bd. 25, Nr. 1, 1989 BARKING,GB, Seiten 25-34, P.F.LUCKHAM 'The Physical Stability of Suspension Concentrates with Particular Reference to Pharmaceutical and Pesticide Formulations'

## Beschreibung

Gegenstand der vorliegenden Erfindung ist ein wäßriges Suspensionskonzentrat, das als insektiziden Wirkstoff Pirimicarb enthält, sowie ein Verfahren zu dessen Herstellung.

Pirimicarb ist ein seit langer Zeit bekannter insektizider Wirkstoff. Im Handel erhältlich ist der Wirkstoff üblicherweise als wasserdispergierbares Pulver (WP) oder als wasserdispergierbares Granulat (WDG). Beide Präparationsformen stauben bei der Zubereitung der Spritzbrühe mehr (WP) oder weniger (WDG) stark. Ein Nachteil, der bei dem als mindergiftig eingestuften Wirkstoff Pirimicarb als problematisch anzusehen ist.

EP-A-237 227 beschreibt Pirimicarb und ein Pyrethroid enthaltende insektizide Mittel, die in Form von staubenden Pulvern oder Granulaten oder auch als flüssige Präparate - allgemein wäßrige Dispersionen oder Emulsionen - vorliegen können, wobei die wäßrigen Dispersionen durch Auflösung des Wirkstoffs in einem organischen Lösungsmittel hergestellt werden, das Zusätze wie Netzmittel, Dipergiermittel etc. enthalten kann, woraufhin Wasser zugesetzt wird.

In EP-A-425 729 sind wäßrige Suspensionskonzentrate eines Benzoats einer Phenoxypyrazolverbindung als Pestizid beschrieben. Die Suspensionskonzentrate weisen einen Eindicker in Form von Heteropolysaccharid oder Smektit sowie oberflächenaktive Mittel auf. Neben Wasser können auch ein oder mehrere organische Lösungsmittel enthalten sein.

Aufgabe der vorliegenden Erfindung war die Bereitstellung einer kostengünstigen, nicht staubenden, flüssigen Pirimicarb-Präparation mit Wasser als alleinigem Trägerstoff.

Das oben angesprochene, auch bei anderen insektiziden Wirkstoffen auftretende Problem wird oftmals durch sogenannte Emulsionskonzentrate (EC) gelöst, bei denen Lösungsmittel wie Xylol, Toluol, Cyclohexanon oder Chlorbenzol eingesetzt werden. Der Einsatz solcher Lösungsmittel ist jedoch ökologisch bedenklich und ökonomisch wenig sinnvoll. Andere ökologisch unbedenkliche und ökonomisch vertretbare Lösungsmittel, wie beispielsweise alle nativen Öle, scheiden für Pirimicarb aus, da der Wirkstoff in diesen Lösungsmitteln zu wenig löslich ist. Für Pirimicarb geeignete Lösungsmittel, wie beispielsweise Aceton, Methanol oder Ethanol scheiden wegen ihrer leichten Entzündlichkeit aus.

Gelöst wurde die Aufgabe durch ein Pirimicarb-Suspensionskonzentrat auf Wasserbasis.

Das lagerfähige Suspensionskonzentrat auf Basis von Pirimicarb liegt dabei als wäßriges Konzentrat mit einem stabilisierenden Gehalt an Gesteinsmehle und/oder synthetische Kieselsäuren umfassenden Füllstoffen und/oder wasserlöslichen intensiven Farbstoffen vor.

Literaturbekannt ist, daß Pirimicarb eine photolytische und hydrolytische Instabilität aufweist. Aus diesem Grund schied daher an sich der Formulierungstyp eines Suspensionskonzentrates auf Wasserbasis aus. Überraschenderweise gelang es mit der vorliegenden Erfindung, durch Verwendung bestimmter, bei der Herstellung von wasserdispergierbaren Pulvern üblicher Hilfsstoffe, Pirimicarb-Suspensionskonzentrate auf Wasserbasis bereitzustellen. Diese erfindungsgemäßen Suspensionskonzentrate zeigen bei den in den Zulassungsverfahren vorgeschriebenen Stabilitätstests weder hydrolytischen noch photolytischen Abbau. Die verwendeten Hilfsstoffe dienen im Zusammenhang mit der erfindungsgemäßen Zubereitung als stabilisierende Bestandteile.

Als stabilisierende Bestandteile können Füllstoffe, wie beispielsweise Gesteinsmehle, vorzugsweise Calcit, Talkum, Kaolinit, Montmorrilonit, Attapulgit oder synthetische Kieselsäuren sowie wasserlösliche, intensive, vorzugsweise blaue Farbstoffe verwendet werden, wobei diese auch als Mischung eingesetzt werden können.

Als Formulierungshilfstoffe können weiterhin Entschäumer, beispielsweise Tensiofix LO 51, einem Gemisch von Kohlenwasserstoffen, Fettsäureamiden, ungesättigten Fettsäurederivaten und nichtionischen Tensiden, Verdicker, beispielsweise Tensiofix 821, einem Xanthangum, Frostschutzmittel, beispielsweise Diethylenglykol, Konservierungsmittel, beispielsweise Formalin und/oder Dispergiermittel, beispielsweise Phosphorsäureester-Derivate eines Tristyrolphenol-Polyglykolesters oder ethoxyliertes Polyacrylphenol und dessen Salze oder Kondensate aus Phenolaldehyd und Polyglykolether oder Formaldehyd und Polyaminen oder nichtionogene und anionische oberflächenaktive Substanzen, besonders bevorzugt Soprophor FL, ein ethoxyliertes Tristyrolphenolderivat, eingesetzt werden.

Um bakteriellen Befall des erfindungsgemäßen Suspensionskonzentrates zu verhindern, kann gegebenenfalls ein geeignetes Bakterizid zugesetzt werden.

Der pH-Wert der Präparationen liegt zwischen 6 und 8, vorzugsweise bei 6 bis 7,5.

Als geeignet hat sich die folgende Grundrezeptur herausgestellt:

| | |
|---|---|
| Pirimicarb | 200,0 bis 700 g/l |
| Farbstoff | 0,1 bis 5 g/l |
| Füllstoff | 1,0 bis 25 g/l |
| Dispergiermittel | 0 bis 100 g/l |
| Bakterizid | 0 bis 5 g/l |
| Verdicker | 0 bis 5 g/l |
| Frostschutzmittel | 0 bis 100 g/l |
| Entschäumer | 0 bis 20 g/l |
| pH regulierende Substanz(en) | 0,1 bis 25 g/l |
| Wasser | bis zu 1 l |

Vorzugsweise werden 400 bis 600 g/l Pirimicarb, 0,1 bis 5 g/l, besonders bevorzugt 1 bis 3 g/l wasserlöslicher Farbstoff, 1 bis 25 g/l, besonders bevorzugt 5 bis 15 g/l Füllstoff, 10 bis 100 g/l, besonders bevorzugt 30 bis 80 g/l Frostschutzmittel, 0,1 bis 5 g/l, besonders bevorzugt 0,5 bis 2 g/l Verdicker, 0,1 bis 5 g/l, besonders bevorzugt 0,5 bis 2 g/l bakterizider Substanz, 1 bis 20 g/l, besonders bevorzugt 5 bis 10 g/l Entschäumer und 10 bis 100 g/l, besonders bevorzugt 25 bis 75 g/l Dispergiermittel eingesetzt.

Besonders geeignet sind die Formulierungen:

| | | |
|---|---|---|
| Pirimicarb | 500,0 g/l | 500,0 g/l |
| Farbstoff | 2,5 g/l | 3,0 g/l |
| Füllstoff | 15,0 g/l | 15,0 g/l |
| Dispergiermittel | 40,0 g/l | 40,0 g/l |
| Bakterizid | 1,0 g/l | 1,0 g/l |
| Verdicker | 2,0 g/l | 2,0 g/l |
| Frostschutzmittel | 80,0 g/l | 80,0 g/l |
| Entschäumer | 10,0 g/l | 10,0 g/l |
| pH regulierende Substanz(en) | 5,0 g/l | 10,0 g/l |
| Wasser | bis zu 1 l | bis zu 1 l |

Hergestellt werden die erfindungsgemäßen Präparationen auf folgende Weise: Die erforderliche Menge Wasser wird in einem Dissolver vorgelegt. Bei Umfangsgeschwindigkeiten von bis zu 20 m/s werden zunächst die Hilfsstoffe, beispielsweise das Frostschutzmittel und das Dispergiermittel (nicht aber der Verdicker und das Konservierungsmittel), die pH-regulierende(n) Substanz(en) und gegebenenfalls der Farbstoff zugegeben. Anschließend erfolgt bei gleicher Umfangsgeschwindigkeit die Zugabe des Füllstoffes und des Wirkstoffes. Die entstehende Suspension wird beispielsweise mittels einer Zahnkolloidmühle vorzerkleinert. Die Feinstvermahlung erfolgt anschließend unter Kühlung in einer Kolloidmühle, z.B. in einer Perlmühle mit einem Durchsatz von bis zu 2000 l/h. Nach der Vermahlung wird die Umfangsgeschwindigkeit auf 5 bis 10 m/s reduziert und über einen längeren Zeitraum wird gegebenenfalls der Verdicker und das Formalin zugesetzt. Anschließend wird etwa eine Stunde gerührt.

So hergestellte Formulierungen haben im Vergleich zu konventionellen Pulvern oder Granulaten mit ca.2 Mikron ein um etwa den Faktor 10 feineres Korn. Aus dieser wesentlich feineren Vermahlung ergibt sich ein Korn mit 100% < 10 Mikron. Dies trägt zu einer verbesserten Wirkung im Vergleich zu Pulvern oder Granulaten bei. Des weiteren sind diese Suspensionskonzentrate sehr leicht zu dosieren, ohne daß sie stauben.

Neben den stabilisierenden Bestandteilen und den Hilfsstoffen können die erfindungsgemäßen Pirimicarb-Formulierungen auch noch weitere insektizide Bestandteile, beispielsweise Pyrethroide wie Deltamethrin oder ähnliches enthalten. Ein bevorzugtes Pyrethroid ist Deltamethrin. Die Kombination von Pirimicarb und Deltamethrin kompensiert weitgehend den Einfluß der Temperatur auf die insektizide Wirkung der erfindungsgemäßen Formulierungen. Während die optimale Wirksamkeit des Deltamethrin bei Temperaturen von 5 bis 15°C liegt, erzielt man mit Pirimicarb die beste Wirkung bei Temperaturen > 15°C. Durch die Kombination der beiden Wirkstoffe erhält man eine insektizide Formulierung mit einem wesentlich breiteren Temperaturprofil. Die Stabilität der Suspensionskonzentrate wird durch die Anwesenheit weiterer biologisch aktiver Bestandteile nicht nachteilig beeinflußt.

Als geeignet hat sich die nachfolgende Rezeptur herausgestellt:

| | |
|---|---|
| Pirimicarb | 20,0 bis 300 g/l |
| Pyrethroid | 1,0 bis 50 g/l |
| Farbstoff | 0,1 bis 5 g/l |
| Füllstoff | 1,0 bis 25 g/l |
| Bakterizid | 0 bis 5 g/l |
| Dispergiermittel | 0 bis 100 g/l |
| Verdicker | 0 bis 5 g/l |
| Frostschutzmittel | 0 bis 100 g/l |
| Entschäumer | 0 bis 20 g/l |
| pH regulierende Substanz(en) | 0,1 bis 25 g/l |
| Wasser | bis zu 1 l |

Vorzugsweise werden 75 bis 125 g/l Pirimicarb, 2,5 bis 7,5 g/l Pyrethroid, 0,1 bis 5 g/l, besonders bevorzugt 1 bis 3 g/l wasserlöslicher Farbstoff, 1 bis 25 g/l, besonders bevorzugt 5 bis 15 g/l Füllstoff, 10 bis 100 g/l, besonders bevorzugt 30 bis 80 g/l Frostschutzmittel, 0,1 bis 5 g/l, besonders bevorzugt 0,5 bis 2 g/l Verdicker, 0,1 bis 5 g/l, besonders bevorzugt 0,5 bis 2 g/l bakterizider Substanz, 1 bis 20 g/l, besonders bevorzugt 5 bis 10 g/l Entschäumer und 10 bis 100 g/l, besonders bevorzugt 25 bis 75 g/l Dispergiermittel eingesetzt.

Als besonders geeignet haben sich die folgenden Formulierungen herausgestellt:

| | | |
|---|---|---|
| Pirimicarb | 200,0 g/l | 200,0 g/l |
| Deltamethrin | 10,0 g/l | 10,0 g/l |
| Farbstoff | 2,0 g/l | 5,0 g/l |
| Füllstoff | 20,0 g/l | 20,0 g/l |
| Bakterizid | 2,0 g/l | 1,0 g/l |
| Dispergiermittel | 40,0 g/l | 80,0 g/l |
| Verdicker | 3,0 g/l | 3,0 g/l |
| Frostschutzmittel | 80,0 g/l | 80,0 g/l |
| Entschäumer | 5,0 g/l | 10,0 g/l |
| pH regulierende Substanz(en) | 10,0 g/l | 5,0 g/l |
| Wasser | bis zu 1 l | bis zu 1 l |

Die erfindungsgemäßen Suspensionskonzentrate zeichnen sich durch spontanes Dispergieren beim Ansetzen der Spritzbrühe aus. Des weiteren sind sie sowohl physikalisch (keine Sedimentation) als auch chemisch (keine Hydrolyse und Photolyse) sehr stabil. Ihre Lagerstabilität beträgt 2 bis 3 Jahre.

## Patentansprüche

1. Lagerfähiges Suspensionskonzentrat auf der Basis von Pirimicarb, **dadurch gekennzeichnet,** daß es als wäßriges Konzentrat mit einem stabilisierenden Gehalt an Gesteinsmehle und/oder synthetische Kieselsäuren ümfassenden Füllstoffen und/oder wasserlöslichen intensiven Farbstoffen vorliegt.

2. Suspensionskonzentrat nach Anspruch 1, dadurch gekennzeichnet, daß es als Füllstoffe in Mengen von 1 - 25 g/l enthält.

3. Suspensionskonzentrate nach Anspruch 1 oder 2, dadurch gekennzeichnet, daß es als Farbstoffe blaue Farbstoffe in Mengen von 0,1 - 5 g/l enthält.

4. Wäßriges Suspensionskonzentrat gemäß Anspruch 1 oder 2, dadurch gekennzeichnet, daß es zusätzlich Formulierungshilfsstoffe, sowie gegebenenfalls Bakterizide enthält und der pH-Wert des Konzentrates zwischen 6 und 8, vorzugsweise bei 6 bis 7,5 liegt.

5. Wäßriges Suspensionskonzentrat gemäß einem der vorhergehenden Ansprüche, dadurch gekennzeichnet, daß es neben Pirimicarb weitere insektizide Wirkstoffe enthalt.

6. Wäßriges Suspensionskonzentrat gemäß einem der Ansprüche 3 oder 4, dadurch gekennzeichnet, daß die Formulierungshilfsstoffe ausgewählt sind aus einer oder mehrerer der folgenden Gruppen: der Entschäumer, der Verdickungsmittel, der Frostschutzmittel, der Konservierungsmittel, der Dispergiermittel und daß die weiteren insektiziden Wirkstoffe Pyrethroide, vorzugsweise Deltamethrin sind.

7. Wäßriges Suspensionskonzentrat gemäß einem der vorhergehenden Ansprüche, dadurch gekennzeichnet, daß es zusammengesetzt ist aus:
| | |
|---|---|
| Pirimicarb | 200,0 bis 700 g/l |
| Farbstoff | 0,1 bis 5 g/l |
| Füllstoff | 1,0 bis 25 g/l |
| Dispergiermittel | 0 bis 100 g/l |
| Bakterizid | 0 bis 5 g/l |
| Verdicker | 0 bis 5 g/l |
| Frostschutzmittel | 0 bis 100 g/l |
| Entschäumer | 0 bis 20 g/l |
| pH regulierende Substanz(en) | 0,1 bis 25 g/l |
| Wasser | bis zu 1 l |

8. Wäßriges Suspensionskonzentrat gemäß Anspruch 6, dadurch gekennzeichnet, daß es zusammengesetzt ist aus:
| | |
|---|---|
| Pirimicarb | 500,0 g/l |
| Farbstoff | 3,0 g/l |
| Füllstoff | 15,0 g/l |
| Dispergiermittel | 40,0 g/l |
| Bakterizid | 1,0 g/l |
| Verdicker | 2,0 g/l |
| Frostschutzmittel | 80,0 g/l |
| Entschäumer | 10,0 g/l |
| pH regulierende Substanz(en) | 10,0 g/l |
| Wasser | bis zu 1 l |
oder
| | |
|---|---|
| Pirimicarb | 500,0 g/l |
| Farbstoff | 2,5 g/l |
| Füllstoff | 15,0 g/l |
| Dispergiermittel | 40,0 g/l |
| Bakterizid | 1,0 g/l |
| Verdicker | 2,0 g/l |
| Frostschutzmittel | 80,0 g/l |
| Entschäumer | 10,0 g/l |
| pH regulierende Substanz(en) | 5,0 g/l |
| Wasser | bis zu 1 l |

9. Wäßriges Suspensionskonzentrat gemäß einem der Ansprüche 4 oder 5, dadurch gekennzeichnet, daß es zusammengesetzt ist aus:
| | |
|---|---|
| Pirimicarb | 20,0 bis 300 g/l |
| Pyrethroid | 1,0 bis 50 g/l |
| Farbstoff | 0,1 bis 5 g/l |
| Füllstoff | 1,0 bis 25 g/l |
| Bakterizid | 0 bis 5 g/l |
| Dispergiermittel | 0 bis 100 g/l |
| Verdicker | 0 bis 5 g/l |
| Frostschutzmittel | 0 bis 100 g/l |
| Entschäumer | 0 bis 20 g/l |
| pH regulierende Substanz(en) | 0,1 bis 25 g/l |
| Wasser | bis zu 1 l |

10. Wäßriges Suspensionskonzentrat gemäß Anspruch 8, dadurch gekennzeichnet, daß es zusammengesetzt ist aus:
| | |
|---|---|
| Pirimicarb | 200,0 g/l |
| Deltamethrin | 10,0 g/l |
| Farbstoff | 5,0 g/l |
| Füllstoff | 20,0 g/l |
| Bakterizid | 1,0 g/l |
| Dispergiermittel | 80,0 g/l |
| Verdicker | 3,0 g/l |
| Frostschutzmittel | 80,0 g/l |
| Entschäumer | 10,0 g/l |
| pH regulierende Substanz(en) | 5,0 g/l |
| Wasser | bis zu 1 l |
oder
| | |
|---|---|
| Pirimicarb | 200,0 g/l |
| Deltamethrin | 10,0 g/l |
| Farbstoff | 2,0 g/l |
| Füllstoff | 20,0 g/l |
| Bakterizid | 2,0 g/l |
| Dispergiermittel | 40,0 g/l |
| Verdicker | 3,0 g/l |
| Frostschutzmittel | 80,0 g/l |
| Entschäumer | 5,0 g/l |
| pH regulierende Substanz(en) | 10,0 g/l |
| Wasser | bis zu 1 l |

11. Verfahren zur Herstellung wäßriger Suspensionskonzentrate gemäß einem der Ansprüche 1 bis 9, dadurch gekennzeichnet, daß die erforderliche Menge Wasser in einem Dissolver vorgelegt wird, bei Umfangsgeschwindigkeiten von bis zu 20 m/s zunächst die Hilfsstoffe mit Ausnahme der Verdicker und das Konservierungsmittel, die pH-regulierende(n) Substanz(en) und gegebenenfalls der Farbstoff zugegeben werden, anschließend bei gleicher Umfangsgeschwindigkeit der Füllstoff und der bzw. die Wirkstoff(e) zugegeben werden, die entstehende Suspension vorzerkleinert wird, unter Kühlung anschließend in einer Kolloidmühle mit einem Durchsatz von bis zu 2000 l/h die Feinstvermahlung vorgenommen wird, danach die Umfangsgeschwindigkeit auf 5 bis 10 m/s reduziert und gegebenenfalls über einen längeren Zeitraum der Verdicker und das Konservierungsmittel zugesetzt und anschließend etwa eine Stunde gerührt wird.

12. Verwendung der wäßrigen Suspensionskonzentrate gemäß einem der Ansprüche 1 bis 9 zur Herstellung insektizider Spritzbrühen.

## Claims

1. Storable suspension concentrate based on pirimicarb, characterized in that it is present as aqueous concentrate having a stabilising content of fillers, said fillers comprising mineral powders and/or synthetic silicic acids, and/or water-soluble, intense colourants.

2. Suspension concentrate according to claim 1, characterized in that it contains fillers in amounts of 1 - 25 g/l.

3. Suspension concentrates according to claim 1 or 2, characterized in that, as colourants, it contains blue colourants in amounts of 0.1 - 5 g/l.

4. Aqueous suspension concentrate according to claim 1 or 2, characterized in that it additionally contains auxiliary agents for formulation as well as, optionally, bactericides, and that the pH value of the concentrate is between 6 and 8, preferably 6 to 7.5.

5. Aqueous suspension concentrate according to any one of the preceding claims, characterized in that apart from pirimicarb it contains further insecticidal active agents.

6. Aqueous suspension concentrate according to one of claims 3 or 4, characterized in that the auxiliary agents for formulation are selected from one or more of the following groups: defoamers, thickeners, antifreeze agents, preservative agents, dispersing agents, and that the further insecticidal active agents are pyrethroids, preferably deltamethrine.

7. Aqueous suspension concentrate according to any one of the preceding claims, characterized in that it is composed of:
| | |
|---|---|
| pirimicarb | 200,0 bis 700 g/l |
| colourant | 0,1 bis 5 g/l |
| filler | 1,0 bis 25 g/l |
| dispersing agent | 0 bis 100 g/l |
| bactericide | 0 bis 5 g/l |
| thickener | 0 bis 5 g/l |
| antifreeze agent | 0 bis 100 g/l |
| defoamer | 0 bis 20 g/l |
| pH regulating substance(s) | 0,1 bis 25 g/l |
| water | bis zu 1 l |

8. Aqueous suspension concentrate according to claim 6, characterized in that it is composed of :
| | |
|---|---|
| pirimicarb | 500,0 g/l |
| colourant | 3,0 g/l |
| filler | 15,0 g/l |
| dispersing agent | 40,0 g/l |
| bactericide | 1,0 g/l |
| thickener | 2,0 g/l |
| antifreeze agent | 80,0 g/l |
| defoamer | 10,0 g/l |
| pH regulating substance(s) | 10,0 g/l |
| water | bis zu 1 l |
or
| | |
|---|---|
| pirimicarb | 500,0 g/l |
| colourant | 2,5 g/l |
| filler | 15,0 g/l |
| dispersing agent | 40,0 g/l |
| bactericide | 1,0 g/l |
| thickener | 2,0 g/l |
| antifreeze agent | 80,0 g/l |
| defoamer | 10,0 g/l |
| pH regulating substance(s) | 5,0 g/l |
| water | bis zu 1 l |

9. Aqueous suspension concentrate according to one of claims 4 or 5, characterized in that it is composed of:
| | |
|---|---|
| pirimicarb | 20,0 bis 300 g/l |
| pyrethroid | 1,0 bis 50 g/l |
| colourant | 0,1 bis 5 g/l |
| filler | 1,0 bis 25 g/l |
| bactericide | 0 bis 5 g/l |
| dispersing agent | 0 bis 100 g/l |
| thickener | 0 bis 5 g/l |
| antifreeze agent | 0 bis 100 g/l |
| defoamer | 0 bis 20 g/l |
| pH regulating substance(s) | 0,1 bis 25 g/l |
| water | bis zu 1 l |

10. Aqueous suspension concentrate according to claim 8, characterized in that it is composed of:
| | |
|---|---|
| pirimicarb | 200,0 g/l |
| deltamethrine | 10,0 g/l |
| colourant | 5,0 g/l |
| filler | 20,0 g/l |
| bactericide | 1,0 g/l |
| dispersing agent | 80,0 g/l |
| thickener | 3,0 g/l |
| antifreeze agent | 80,0 g/l |
| defoamer | 10,0 g/l |
| pH regulating substance(s) | 5,0 g/l |
| water | bis zu 1 l |
or
| | |
|---|---|
| pirimicarb | 200,0 g/l |
| deltamethrine | 10,0 g/l |
| colourant | 2,0 g/l |
| filler | 20,0 g/l |
| bactericide | 2,0 g/l |
| dispersing agent | 40,0 g/l |
| thickener | 3,0 g/l |
| antifreeze agent | 80,0 g/l |
| defoamer | 5,0 g/l |
| pH regulating substance(s) | 10,0 g/l |
| water | bis zu 1 l |

11. Process for the production of aqueous suspension concentrates according to any one of claims 1 to 9, characterized in that the required amount of water is placed in a dissolver, that, at peripheral speeds of up to 20 m/s, initially the auxiliary agents, with the exception of the thickeners and of the preservative agent, the pH-regulating substance(s) and optionally the colourant are added thereto, that subsequently, at the same peripheral speed, the filler and the active substance or active substances are added, that the resulting suspension is subjected to preliminary size reduction, that subsequently fine grinding is performed, while cooling, in a colloid mill at a throughput of up to 2000 l/h, that thereafter the peripheral speed is reduced to 5 to 10 m/s, and that optionally the thickener and the preservative agent are added thereto over a prolonged period of time and that this is subsequently stirred for about one hour.

12. Use of the aqueous suspension concentrates according to any one of claims 1 to 9 for the production of insecticidal spray emulsions.

## Revendications

1. Concentrat de suspension apte à l'entreposage à base de Pirimicarb, caractérisé en ce qu'il est présent sous la forme d'un concentrat aqueux possédant une teneur stabilisatrice en matières de charge comprenant de la poudre de roche et/ou des acides siliciques synthétiques et/ou en colorants intenses solubles dans l'eau.

2. Concentrat de suspension selon la revendication 1, caractérisé en ce qu'il contient des matières de charge dans des quantités de 1 à 25 g/l.

3. Concentrat de suspension selon la revendication 1 ou 2, caractérisé en ce qu'il contient, à titre de colorants, des colorants bleus dans des quantités de 0,1 à 5 g/l.

4. Concentrat de suspension aqueux selon la revendication 1 ou 2, caractérisé en ce qu'il contient en outre des substances auxiliaires de formulation, ainsi que le cas échéant des bactéricides, la valeur de pH du concentrat se situant entre 6 et 8, de préférence à une valeur de 6 à 7,5.

5. Concentrat de suspension aqueux selon l'une quelconque des revendications précédentes, caractérisé en ce qu'il contient, outre du Pirimicarb, des substances actives insecticides supplémentaires.

6. Concentrat de suspension aqueux selon l'une quelconque des revendications 3 ou 4, caractérisé en ce que les substances auxiliaires de formulation sont choisies parmi un ou plusieurs des groupes ci-après: des agents antimousse, des agents épaississants, des agents de protection contre le gel, des agents de conservation, des agents de mise en dispersion, et en ce que les substances actives insecticides supplémentaires sont des pyréthroïdes, de préférence le Deltaméthrin.

7. Concentrat de suspension aqueux selon l'une quelconque des revendications précédentes, caractérisé en ce qu'il est composé de:
| | |
|---|---|
| Pirimicarb à raison de | 200,0 à 700 g/l |
| colorant à raison de | 0,1 à 5 g/l |
| matière de charge à raison de | 1,0 à 25 g/l |
| agent de mise en dispersion à raison de | 0 à 100 g/l |
| bactéricide à raison de | 0 à 5 g/l |
| épaississant à raison de | 0 à 5 g/l |
| agent de protection contre le gel à raison de | 0 à 100 g/l |
| agent antimousse à raison de | 0 à 20 g/l |
| substance(s) régulatrice(s) du pH à raison de | 0,1 à 25 g/l |
| eau pour compléter à | 1 litre |

8. Concentrat de suspension aqueux selon la revendication 6, caractérisé en ce qu'il est composé de:
| | |
|---|---|
| Pirimicarb à raison de | 500,0 g/l |
| colorant à raison de | 3,0 g/l |
| matière de charge à raison de | 15,0 g/l |
| agent de mise en dispersion à raison de | 40,0 g/l |
| bactéricide à raison de | 1,0 g/l |
| épaississant à raison de | 2,0 g/l |
| agent de protection contre le gel à raison de | 80,0 g/l |
| agent antimousse à raison de | 10,0 g/l |
| substance(s) régulatrice(s) du pH à raison de | 10,0 g/l |
| eau pour compléter à | 1 litre |
ou
| | |
|---|---|
| Pirimicarb à raison de | 500,0 g/l |
| colorant à raison de | 2,5 g/l |
| matière de charge à raison de | 15,0 g/l |
| agent de mise en dispersion à raison de | 40,0 g/l |
| bactéricide à raison de | 1,0 g/l |
| épaississant à raison de | 2,0 g/l |
| agent de protection contre le gel à raison de | 80,0 g/l |
| agent antimousse à raison de | 10,0 g/l |
| substance(s) régulatrice(s) du pH à raison de | 5,0 g/l |
| eau pour compléter à | 1 litre |

9. Concentrat de suspension aqueux selon l'une quelconque des revendications 4 ou 5, caractérisé en ce qu'il est composé de:
| | |
|---|---|
| Pirimicarb à raison de | 20,0 à 300 g/l |
| pyréthroïdes à raison de | 1,0 à 50 g/l |
| colorant à raison de | 0,1 à 5 g/l |
| matière de charge à raison de | 1,0 à 25 g/l |
| bactéricide à raison de | 0 à 5 g/l |
| agent de mise en dispersion à raison de | 0 à 100 g/l |
| épaississant à raison de | 0 à 5 g/l |
| agent de protection contre le gel à raison de | 0 à 100 g/l |
| agent antimousse à raison de | 0 à 20 g/l |
| substance(s) régulatrice(s) du pH à raison de | 0,1 à 25 g/l |
| eau pour compléter à | 1 litre |

10. Concentrat de suspension aqueux selon la revendication 8, caractérisé en ce qu'il est composé de:
| | |
|---|---|
| Pirimicarb à raison de | 200,0 g/l |
| Deltaméthrin à raison de | 10,0 g/l |
| colorant à raison de | 5,0 g/l |
| matière de charge à raison de | 20,0 g/l |
| bactéricide à raison de | 1,0 g/l |
| agent de mise en dispersion à raison de | 80,0 g/l |
| épaississant à raison de | 3,0 g/l |
| agent de protection contre le gel à raison de | 80,0 g/l |
| agent antimousse à raison de | 10,0 g/l |
| substance(s) régulatrice(s) du pH à raison de | 5,0 g/l |
| eau pour compléter à | 1 litre |
ou
| | |
|---|---|
| Pirimicarb à raison de | 200,0 g/l |
| Deltaméthrin à raison de | 10,0 g/l |
| colorant à raison de | 2,0 g/l |
| matière de charge à raison de | 20,0 g/l |
| bactéricide à raison de | 2,0 g/l |
| agent de mise en dispersion à raison de | 40,0 g/l |
| épaississant à raison de | 3,0 g/l |
| agent de protection contre le gel à raison de | 80,0 g/l |
| agent antimousse à raison de | 5,0 g/l |
| substance(s) régulatrice(s) du pH à raison de | 10,0 g/l |
| eau pour compléter à | 1 litre |

11. Procédé pour la préparation de concentrats de suspensions aqueux selon l'une quelconque des revendications 1 à 9, caractérisé en ce qu'on dépose au préalable la quantité d'eau requise dans un "Dissolver", à des vitesses périphériques allant jusqu'à 20 m/s, on ajoute d'abord les substances auxiliaires, à l'exception de l'agent épaississant et de l'agent de conservation, la ou les substances régulatrices du pH et le cas échéant le colorant, ensuite, à la même vitesse périphérique, la matière de charge et la ou les substances actives, on soumet la suspension obtenue à un broyage préalable, puis tout en refroidissant, on procède au broyage très fin dans un moulin des colloïdes avec un débit allant jusqu'à 2000 l/h, puis on réduit la vitesse périphérique à une valeur de 5 à 10 m/s et on ajoute le cas échéant, pendant un laps de temps prolongé, l'agent épaississant et l'agent de conservation, et on agite ensuite pendant approximativement 1 heure.

12. Utilisation des concentrats de suspensions aqueux selon l'une quelconque des revendications 1 à 9 pour la préparation de bouillons de pulvérisation insecticides.
